# EUROPEAN PATENT APPLICATION

(11) **EP 1 008 780 A1**
(43) Date of publication of application: **14.06.2000**
(21) Application number: 98830735.1
(22) Date of filing: 07.12.1998
(51) Int. Cl.: F16D 65/00, F16D 65/16

(54) **A disk brake for a vehicle or the like**

(71) Applicant: Freni Brembo S.p.A., 24035 Curno, Bergamo (IT)
(72) Inventor: Ciotti, Alessandro, 24036 Ponte San Pietro (Bergamo) (IT); Gotti, Giovanni, 24011 Alme' (Bergamo) (IT)
(74) Representative: De Nova, Roberto

(57) **Abstract**

An unusually quiet disk brake (1, 30) for vehicles and the like comprises a disk (2), pads (7, 8) made of a material with a high coefficient of friction acting on the disk (2) upon braking, and a block (19) made of a material with a low coefficient of friction, acting on the disk (2) when the pads (7, 8) are active.

## Description

The present invention relates to a disk brake for a vehicle or the like, of the type comprising a disk, a pad-carrier, and pads acting, under the effect of pressure means, on a braking band of the disk.

As is known, disk brakes sometimes run into the problem of the emission of a whistle upon braking, which detracts from the comfort of the vehicle in motion.

This problem, which is clearly due to the occasional appearance of vibrations, is difficult to eradicate.

For this purpose, the solution has been proposed of associating with the pads, in a position between the pads and the pressure means, a plurality of plates constituting an assembly with a certain damping capacity. This proposal has merely attenuated the whistling and made it less frequent.

It has been proposed to fit so-called inertial masses on the hydraulic pistons of the pressure means in order to vary their natural oscillation frequencies. Small additional masses have also been formed in the disk, if it is of the self-ventilated type, on the inner sides of the two annular plates of the disk. It has also been attempted to add masses to the caliper. However, these suggestions, like others, such as the use of damping greases or the adoption of modified shapes of the pads, overcome the problem only at the cost of lengthy and laborious adjustment performed by trial and error.

The problem upon which the present invention is based is that of devising a disk brake of the type specified which has structural and functional characteristics such as to overcome the aforementioned problem.

This problem is solved by a disk brake of the type specified which is characterized in that it comprises a pressure element acting on the braking band.

Further characteristics and the advantages of the disk brake according to the present invention will become clear from the following description of an embodiment thereof given by way of non-limiting example, with reference to the appended drawings, in which:
Figure 1 is a schematic view of a detail of a disk brake according to the present invention,
Figure 2 is a schematic view of a detail of the disk brake of Figure 1, on an enlarged scale,
Figure 3 is a schematic view of the detail of Figure 2, taken at a different stage of its operation, and
Figure 4 is a schematic view of a detail of a disk brake according to a variant of the present invention.

With reference to the appended drawings, a disk brake according to the present invention, suitable for a vehicle or the like, is generally indicated 1.

The disk brake 1 comprises a disk 2 having a braking band 3 only a portion of which is shown in the drawing.

The braking band 3 is annular and has opposed faces 4 and 5.

The disk 2 rotates and the braking band advances along a predetermined tangential axis T-T, in a predetermined direction, indicated by the arrow F, when the vehicle is moving forwards, and along the same axis T-T but in the opposite direction, indicated by the arrow G, when the vehicle is moving backwards.

A fixed pad-carrier 6, arranged astride the braking band 3, supports two pads 7 and 8 acting on the faces 4 and 5 of the braking band 3, respectively, along a line of action X-X perpendicular to the faces 4 and 5.

The pads 7 and 8, of length L along the axis T-T, are made of a material with a high coefficient of friction and are subjected to the action of pressure means 10 which, in the embodiment shown, are constituted by two respective hydraulic cylinder-piston units 11 and 12, supplied with pressurized fluid through respective ducts 13 and 14 branching from a duct 15 connected to a conventional master cylinder, not shown in the drawing.

In the disk brake 1 according to the invention, the pad-carrier 6 comprises an appendage 16 which is elongate along the tangential axis T-T and extends in the direction of the arrow F.

In the appendage 16, more precisely, at a free end 17 thereof, there is a pressure element 9, spaced from the pads 7 and 8 by a predetermined distance, indicated H, and acting on the braking band 3 along a line of action Y-Y perpendicular to the faces 4 and 5. The distance H is preferably approximately twice the length L of the pads.

In particular, at the free end 17, there is a seat 18 which houses a block 19 in a guided manner, the block 19 constituting the pressure element 9 and acting on the face 4 under the effect of pressure means 20.

The pressure means 20 may be selected as desired from those available, according to preference.

The pressure means 20 are advantageously of the same kind as the pressure means 10.

In particular, the pressure means 20 comprise a hydraulic cylinder-piston unit 21 which is supplied with pressurized fluid through a duct 22 branching from the duct 15 and having a pressure-regulating valve 23 which can be calibrated and which limits the pressure to a value lower than that of the braking pressure, for example, to a value of between 15 and 20 bars.

The block 19 has a pivoting head 24 which can perform an angular movement of amplitude A, for example of between 15° and 30°, about the line of action Y-Y, in the direction of the arrow F during forward movement or, alternatively, in the direction of the arrow G during rearward movement.

The pivoting head 24 has a coating 25 of a material with a low coefficient of friction, for example Turcite (registered trade mark).

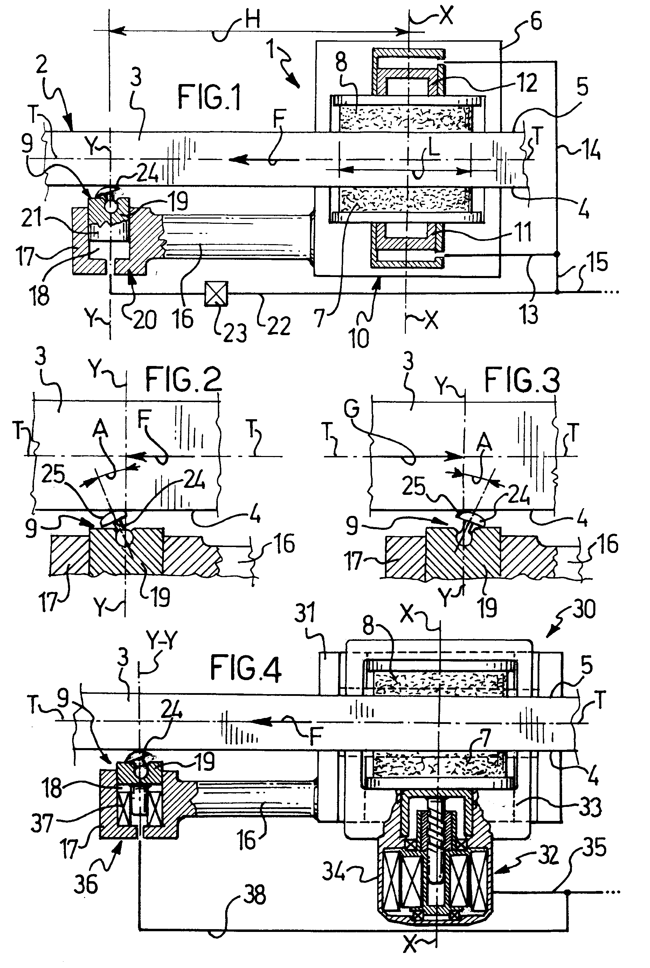

A variant of the invention is shown in Figure 4, in which parts structurally and functionally the same as to those of the disk brake of Figures 1, 2 and 3 retain the same reference numerals and are not described below.

In a disk brake 30, a pad-carrier 31 extends astride a braking band 3 and acts thereon by means of two pads 7 and 8, which are supported by the pad-carrier 31 and are subjected to the action of electrical pressure means 32 supported by a floating body 33 mounted in a guided manner on the pad-carrier 31.

In particular, the pressure means 32 comprise an electric motor 34 supplied by means of a cable 35.

A pressure element 9 and, in particular, a block 19, acts on the face 4 of the braking band 3 under the effect of pressure means 36.

The pressure means 36 may be selected as desired from those available, according to preference.

The pressure means 36 are advantageously electrical. In particular, the pressure means 36 are constituted by a solenoid 37 supplied by means of a cable 38 branching from the cable 35.

In operation, when the pressure means 10, 33 of the pads 7, 8 are activated in order to achieve the desired braking, the pressure element 9 is simultaneously activated. In particular, the pressure means 20, 36 of the block 19 are activated simultaneously and the block 19 comes into contact, with pressure, with the face 4 of the braking band 3.

During forward movement, the pivoting head 24 is brought to the position in which it is displaced angularly forwards (see Fig. 2), so that it is subjected to tension and is not subject to jamming. During rearward movement, the pivoting head 24 is brought to the position in which it is displaced angularly rearwards (see Figure 3) and in which, again, it is subjected to tension and is not subject to jamming.

It has been found that any whistling during braking completely disappears by virtue of this contact with pressure exerted by the element 9 on the face 4 of the braking band 3 at a predetermined distance H from the pads 7, 3.

Attempts to explain the phenomenon, have led to the belief that the whistling resulted from a vibration or oscillation of the braking band which caused it to move sideways away from its natural position and that the pressure element acts in a direction such as to keep the braking band in its natural position and to prevent it from moving away therefrom.

The main advantage of the disk brake according to the present invention lies in its unusually quiet operation.

A further advantage of the disk brake according to the present invention is that it is structurally simple and easily adjusted so that reliable operation and a long operative life can be expected.

Naturally, in order to satisfy contingent and specific requirements, an expert in the art may apply to the disk brake described above and illustrated in the drawings many modifications and variations all of which, however, are included within the scope of protection of the invention as defined by the following claims.

## Claims

1. A disk brake (1, 30) for a vehicle or the like, of the type comprising a disk (2), a pad-carrier (6, 31), and pads (7, 8) acting, under the effect of pressure means (10, 32), on a braking band (3) of the disk (2), characterized in that it comprises a pressure element (9) acting on the braking band (3).

2. A disk brake (1, 30) according to Claim 1, characterized in that the pressure element (9) is a block (19) subjected to the action of pressure means (20, 36).

3. A disk brake (1, 30) according to Claim 2, characterized in that the pad-carrier (6) comprises an appendage (16) and a seat (18) in the appendage (16) for housing the block (19) in a guided manner.

4. A disk brake (1, 30) according to Claim 3, characterized in that the appendage (16) is elongate along an axis tangential to the braking band (3) and extends in the direction in which the braking band (3) advances when the vehicle is travelling forwards.

5. A disk brake (1, 30) according to Claim 2, characterized in that the pressure means (20, 36) of the block (19) are of the same kind as the pressure means (10, 32) of the pads (7, 8).

6. A disk brake (1) according to Claim 5, characterized in that the pressure means (10) of the pads (7, 8) and the pressure means (20) of the block (19) are hydraulic.

7. A disk brake (1) according to Claim 6, characterized in that the pressure means (20) of the block (19) comprise a cylinder-piston unit (21).

8. A disk brake (30) according to Claim 5, characterized in that the pressure means (32) of the pads (7, 8) and the pressure means (36) of the block (19) are electric.

9. A disk brake (30) according to Claim 8, characterized in that the pressure means (36) of the block (19) comprise a solenoid (37).

10. A disk brake (1, 30) according to Claim 2, characterized in that the block (19) comprises a pivoting head (24) acting on the braking band (3).

11. A disk brake (1, 30) according to Claim 10, characterized in that the pivoting head (24) has a coating (25) of a material with a low coefficient of friction.
